# DEMANDE DE BREVET EUROPEEN

(11) **EP 1 747 714 A1**
(43) Date de publication de la demande: **31.01.2007**
(21) Numéro de dépôt: 06117544.4
(22) Date de dépôt: 20.07.2006
(51) Int. Cl.: A01G 17/06, F16B 7/04, A01G 9/12

(54) **Dispositif de tuteurage comportant un bloc porteur**

(30) Priorité: 25.07.2005 FR 0507909; 10.03.2006 FR 0602149
(71) Demandeur: Penet, Pierre Marie Marcel, 03000 Moulins (FR)
(72) Inventeur: Penet, Pierre Marie Marcel, 03000 Moulins (FR)
(74) Mandataire: Colas, Jean-Pierre

(57) **Abrégé**

Dispositif de tuteurage comportant un bloc porteur (1) et des tiges (8',9',10',11') de tuteur et d'accessoires solidarisables au bloc porteur (1) par insertion dans des trous (4) ou des fentes (0) correspondants ménagés dans le bloc porteur (1),dont ledit bloc porteur comporte des moyens de serrage réglables (3, 5, 18), indépendants les uns des autres, pour bloquer en position lesdites tiges insérées dans lesdits trous (4) ou lesdites fentes (0).

## Description

Dans le domaine de la culture des végétaux, il est d'usage fréquent d'installer des tuteurs pour en soutenir certains qui ne sont pas capables de se dresser par leurs propres moyens ou insuffisamment forts pour supporter les effets du vent, de la pluie ou d'un arrosage aérien.

Les dispositifs qui sont ainsi proposés pour assurer ce rôle sont variés comme le montre généralement les dictionnaires et ouvrages spécialisés traitant des techniques de culture des végétaux.

Le dispositif le plus élémentaire étant la simple tige plantée dans le sol et munie de moyens d'attache des parties du végétal à supporter. Lesquels moyens sont généralement des haubans ou des frettes bien souvent réalisés en bouts de ficelles ou de fil de fer et autres matériaux.

A partir de ce tuteur élémentaire, souvent appelé "rame" dans le cas des pois et haricots, "échalas" pour la vigne, ...etc., il est possible, comme le font les gens du métier de la culture des végétaux, de réaliser de multiples combinaisons pour répondre aux besoins les plus divers, en y associant quelques accessoires complémentaires toujours élémentaires comme des fils tendus, des entretoises, des agrafes,...etc.

Le document DE-U-87 00 429 décrit un dispositif de tuteurage mural comportant un bloc porteur et une tige vissée dans ledit bloc porteur ; ladite tige étant destinée à être vissée dans un mur. Ledit dispositif de tuteurage comporte un moyen de serrage réglable pour maintenir en position des fils dans des trous dudit bloc porteur.

L'utilisation du dispositif décrit dans DE-U-87 00 429 présente plusieurs inconvénients. En effet, le moyen de serrage ne permet pas de fixer simultanément des fils de diamètres différents. De plus, il est difficile de régler la position du bloc porteur sur la tige vissée en gardant lesdits fils en position, d'autant plus que ladite tige est très petite. En outre, un tel dispositif n'est pas adapté pour être planté dans le sol.

Dans les divers ouvrages traitant de la culture des végétaux que l'on peut trouver dans les magasins de Jardinerie, on est surpris de constater que le Tuteurage ne fait pas l'objet de bien longs commentaires : quelques lignes et bien souvent rien du tout.

Cela prouve que l'homme du métier s'est peu soucié de la technique du tuteurage et de son amélioration.

Dans les magasins dits de Bricolage, on trouve systématiquement le tuteur élémentaire, la simple tige, en dimensions et matériaux divers.

Depuis quelques temps et dans les magasins de Jardinerie, on trouve des "Systèmes de Tuteurage" relativement élaborés qui permettent de réaliser des supports, pour végétaux, de dimensions et formes variées, à partir de composants simples : des Tiges (élément de base), auxquelles sont associés de façon amovible des Coupleurs et des Anneaux ou Grilles.

On cite en particulier le produit hollandais PEACOCK qui est distribué en France.

Ce système de tuteurage utilise un moyen d'assemblage courant, d'une tige porteuse à une entretoise, comme dans le cas des abris légers où chaque pied est muni à différentes hauteurs de portions de tube qui sont soudées parallèlement à l'axe du dit pied et dans lesquelles sont engagées les extrémités pliées à 90° des entretoises.

Le Système PEACOCK se différenciant de la disposition ci-dessus par le fait que les portions de tube soutenant les accessoires associés (anneaux et grilles) ne sont pas soudés à une tige tuteur mais incorporés à un composant dit Coupleur qui est rendu solidaire de la dite tige tuteur par enfilage ou clipsage.

D'une façon générale, ces coupleurs ne sont pas munis d'un moyen de freinage ajustable sur la tige tuteur. On peut donc craindre qu'après quelques temps d'utilisation, interviennent des glissements intempestifs, par le fait : du poids du végétal soutenu, de la réduction des forces de frottements lors d'un arrosage ou d'une pluie, d'une usure exagérée de la tige ou du coupleur après plusieurs manoeuvres d'ajustement le long de la tige.

Pour obtenir une force de frottement suffisante et stable, les tolérances de dimension en diamètre de la tige et du coupleur doivent être assez précises. Les conditions d'emploi dans la poussière des cultures ne sont pas favorables à la conservation de ces tolérances.

D'autre part ces coupleurs sont faits pour recevoir des accessoires, (anneaux, grilles ou autres) directement en contact avec le végétal à soutenir, qui sont tenus par le moyen de leurs extrémités pliées à 90° et engagées dans les trous des dits coupleurs.

Dans ces conditions, les accessoires ont toujours qu'une seule position spatiale et sont difficilement ouvrables. Conditions qui ne facilitent pas les manipulations du végétal lors de la pose du tuteurage.

En conclusion, les dispositifs que la technique actuelle propose sur le marché présentent de nombreux inconvénients, lors de leur mise en place ou lors du développement du végétal soutenu.

On précise ci-après quelques uns des principaux inconvénients.

Dans le cas le plus courant de la simple tige à haubans :

La réalisation du haubanage nécessite beaucoup de temps et se trouve perdue à la fin de la saison. En même temps que l'opération provoque bien souvent des détériorations du végétal.

Dans le cas des Systèmes de Tuteurage, comme celui décrit ci-dessus :
- chaque coupleur doit être enfilé sur la tige porteuse avant de la planter dans le sol.

Toute addition ou modification de position paraît difficile sinon impossible.
- il faut installer sur la tige autant de coupleur (à deux trous) que d'accessoires prévus.

On remarque que deux coupleurs nouveaux ont été créés : un coupleur enfilable à 6 trous qui peut donc porter trois accessoires et un coupleur à deux trous clipsable.

Nouveautés qui donnent un peu de souplesse d'utilisation qui manquait.
- Aucun coupleur n'est prévu équipé d'un moyen mécanique ajustable pour le solidariser à la tige tuteur : pour pose ou dépose à volonté ou ajustage de la position.
- Aucun moyen de freinage ajustable n'est prévu sur les coupleurs, lesquels peuvent donc éventuellement glisser sur la tige.
- les anneaux soutenant le végétal ont une position spatiale fixe et sont difficiles à ouvrir pour y introduire les tiges du végétal. Cela conduit à installer les anneaux très tôt au début du développement du végétal ou bien à le brutaliser quand il est trop développé. De toute manière, il est difficile de modifier la distribution des tiges dans les anneaux ou entre plusieurs anneaux.

Le but de l'invention est de résoudre des problèmes de la technique antérieure sus mentionnés.

Selon l'invention, on atteint ce but au moyen d'un dispositif de tuteurage comportant un bloc porteur et des tiges de tuteur et d'accessoires solidarisables au bloc porteur par insertion dans des trous ou des fentes correspondants ménagés dans le bloc porteur, caractérisé en ce que ledit bloc porteur comporte des moyens de serrage réglables, indépendants les uns des autres, pour bloquer en position lesdites tiges insérées dans lesdits trous ou lesdites fentes.

Avantageusement, un dispositif de tuteurage selon l'invention permet de changer les tiges d'accessoires indépendamment les unes des autres et sans avoir à desserrer les autres tiges. De plus, un dispositif de tuteurage selon l'invention permet de régler la hauteur du bloc porteur, en fonction des besoins, sans pour autant devoir enlever les différentes tiges d'accessoires. En outre, un tel dispositif permet de serrer plus ou moins les tiges indépendamment les unes des autres ainsi que d'utiliser des tiges de diamètres différents.

De préférence, le dispositif de tuteurage comporte encore une ou plusieurs des caractéristiques optionnelles suivantes :
- Le bloc porteur peut comporter des trous radiaux, de préférence cylindriques, pour recevoir des tiges d'accessoires.
- Le bloc porteur peut comporter une fente radiale apte à recevoir une tige de tuteur, lesdits moyens de serrage réglables étant aptes à assurer une fixation de ladite tige de tuteur par serrage au fond de la fente radiale.

Avantageusement, le bloc porteur d'un dispositif selon l'invention est ainsi amovible par rapport à la tige de tuteur, même quand cette dernière est plantée dans le sol, généralement verticalement.

De préférence, le dispositif de tuteurage comporte encore une ou plusieurs des caractéristiques optionnelles suivantes :
- Les moyens de serrage réglables peuvent comporter une vis de pression ou une came réglable.
- Le bloc porteur peut être en plastique, le trou de passage des vis de pression étant lisse avant le premier vissage desdites vis.
- Le bloc porteur peut être réalisé en une pièce monobloc plane ou en deux pièces définissant, par complémentarité de forme, des trous de réception de tiges d'accessoires.
- Une tige d'accessoire est en forme d'hélicoïde étiré.
- Une tige d'accessoire mobile interne est introduite dans les boucles de l'hélicoïde étiré.
- Une tige d'accessoire a une forme carrée ou rectangulaire.
- Un accessoire n'est pas fermé sur lui-même, et une de ces extrémités est insérée dans un desdits trous.
- Des moyens de guidage axial ou de butée, de préférence sous la forme d'une cale ou d'une plaque, d'une des dites tiges d'accessoire ou de tuteur.
- Des moyens conformés pour limiter le déplacement des moyens de guidage axial par rapport au bloc porteur de préférence à l'aide d'au moins une languette pénétrant dans une fente, transversale ou pas, aménagé dans le bloc porteur.
- Le moyen de serrage réglable peut comporter un moyen de bridage conformé pour former avec le bloc porteur un logement de réception d'une tige d'accessoire ou de tuteur.
- La vis de pression, sus décrite, peut être adaptée pour serrer le moyen de bridage.

On entend par moyen de guidage axial un dispositif permettant le maintien dans une direction fixe des dites tiges d'accessoires ou de tuteur, en particulier sous la forme d'une fente radiale, d'un manchon, d'une rigole, de trou ou pseudo trou, d'un épaulement ou encore d'un ensemble de languettes. On entend par moyen de bridage un moyen pour maintenir unies les pièces, en particulier une barre de pression ou une rigole. On entend par « accessoire non fermé » un accessoire dont une extrémité est libre pour former une ouverture ou un passage.

Le dispositif selon l'invention, appelé Bloc Porteur et Accessoires Amoviblement associés pour Tuteurage de Végétaux, est proposé pour remédier aux inconvénients rencontrés lors de l'utilisation des dispositifs disponibles sur le marché qui représentent l'état de la technique, comme cela à été décrit ci-dessus.

L'application au tuteurage des végétaux de la présente invention étant bien évidemment une réalisation particulière servant à la description qui va suivre mais qui n'a pas un caractère limitatif des applications possibles.

En effet, en dimensionnant le Bloc Porteur et les accessoires associés de façon adéquate, on peut facilement imaginer de l'implanter sur toutes sortes de tiges ou poteaux verticaux pour porter toutes sortes d'objets.

Avant de procéder à la description de l'invention, dans le cas de l'application particulière au tuteurage des végétaux, il convient de préciser comme ci-après les caractéristiques préférées d'un premier mode de réalisation.

Une première caractéristique est le fait que le Bloc Porteur pris isolément est une portion de cylindre, par exemple circulaire, fendu radialement pour être engagé sur une tige, par exemple de tuteurage, pour y être assujetti, de préférence de façon réversible.

Une deuxième caractéristique est le fait que le Bloc Porteur est équipé d'un moyen de fixation, facile à manoeuvrer ; pour l'implanter sur une tige, le régler en position, ou l'enlever.

Une troisième caractéristique est le fait que le Bloc Porteur porte sur sa surface latérale des trous cylindriques radiaux par lesquels des accessoires associés sont tenus.

Une quatrième caractéristique est le fait que les accessoires associés au Bloc Porteur servent à soutenir des végétaux.

Une cinquième caractéristique est le fait que les accessoires associés sont munis d'une tige de fixation qui est engagée dans l'un des trous du Bloc Porteur.

Une sixième caractéristique est le fait que les trous cylindriques latéraux du Bloc Porteur qui reçoivent la tige d'un accessoire, sont chacun munis d'un moyen de blocage pour immobiliser l'accessoire.

Une septième caractéristique est le fait que les accessoires peuvent, chacun indépendamment, être orientés autour de l'axe des trous latéraux dans lesquels ils sont tenus et immobilisés dans une position quelconque choisie.

Une huitième caractéristique est le fait que les accessoires sont de formes et dimensions variées selon les besoins. Dans le cas du tuteurage de végétaux, ils peuvent être en forme de boucle, d'hélicoïde étiré, de tige droite horizontale ou oblique, sans jamais être fermés sur eux mêmes.

Grâce à ces différentes dispositions qui caractérisent le dispositif selon l'invention, il est possible de remédier à la plupart des inconvénients évoqués au sujet de l'état de la technique.

La description qui suit d'une réalisation particulière non limitative pour le tuteurage de végétaux permet de bien comprendre le mode de fonctionnement et de réalisation du dispositif proposé et les avantages qu'il apporte.

Les figures ci-après, associées à la description, correspondent aux désignations suivantes :
Figure 1 Vue d'ensemble du Bloc Porteur avec divers accessoires, installé sur une tige.
Figure 2 Vue du Bloc Porteur seul, en gros plan.
Figure 3 Vue de l'accessoire "à tige oblique" plantée au sol.
Figure 4 Vue de l'accessoire "en hélicoïde" installé en "bordure".
Figure 5 Vue du Bloc Porteur obtenu par moulage.
Figure 6 Vue du Bloc Porteur obtenu par emboutissage.

Le mode de réalisation choisi, pour faciliter la description, fait intervenir des pièces métalliques soudées entre elles. Il est bien évident cependant que si ce mode de réalisation illustre bien la conception du dispositif selon l'invention, il ne correspond pas à la volonté d'éliminer d'autres mode de réalisation qui pourraient être préférés pour une production en grande série et de faible coût, par le moyen par exemple des procédés d'emboutissage, ou de moulage de matériaux métalliques ou plastiques, qui sont décrits à la suite.

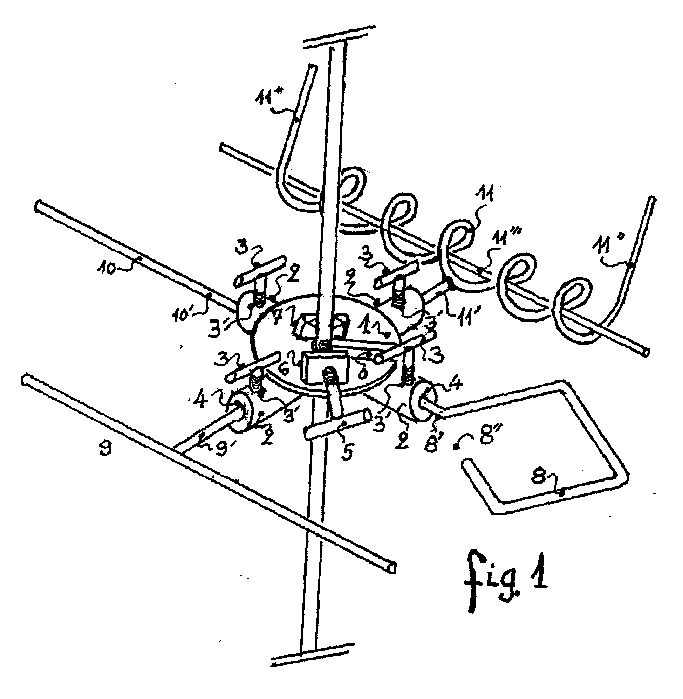

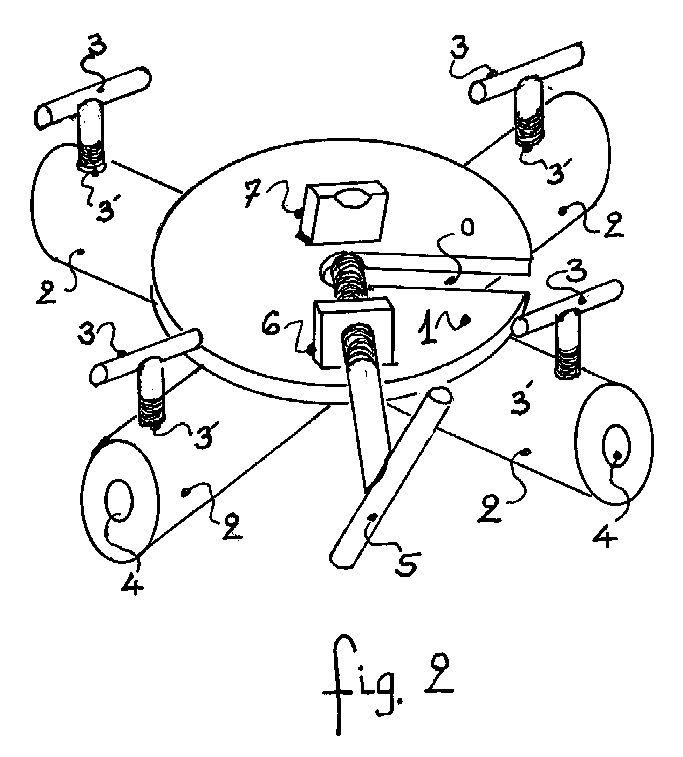

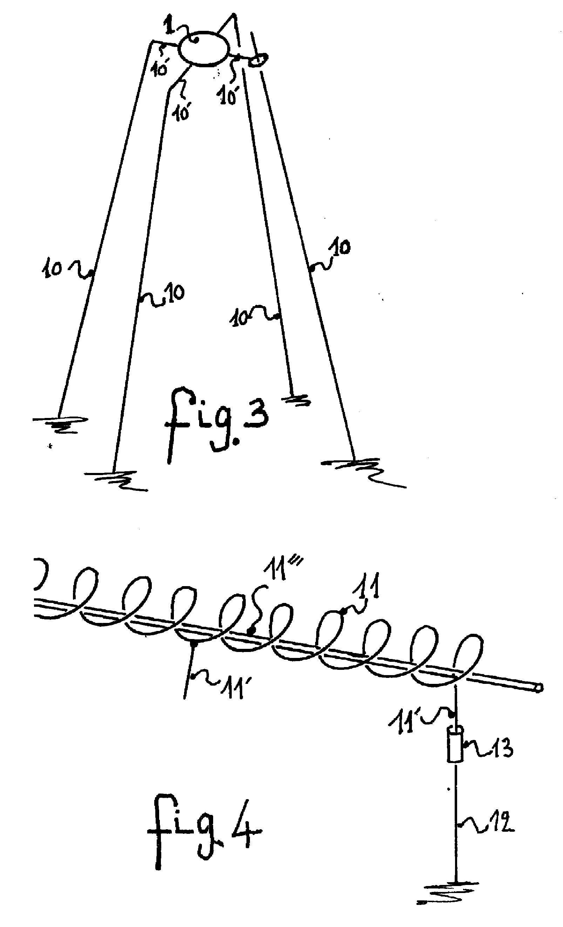

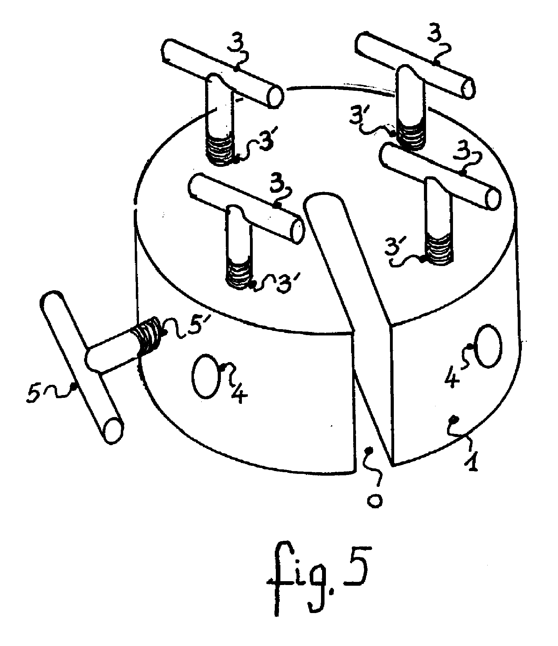

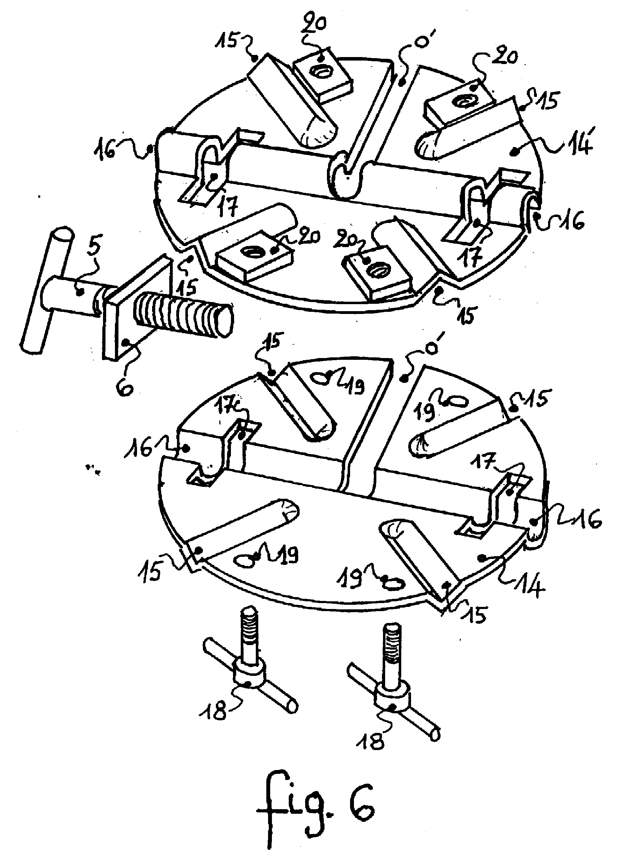

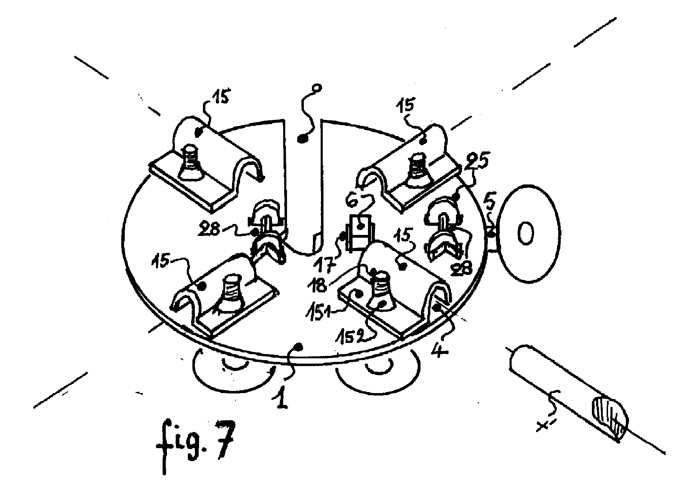

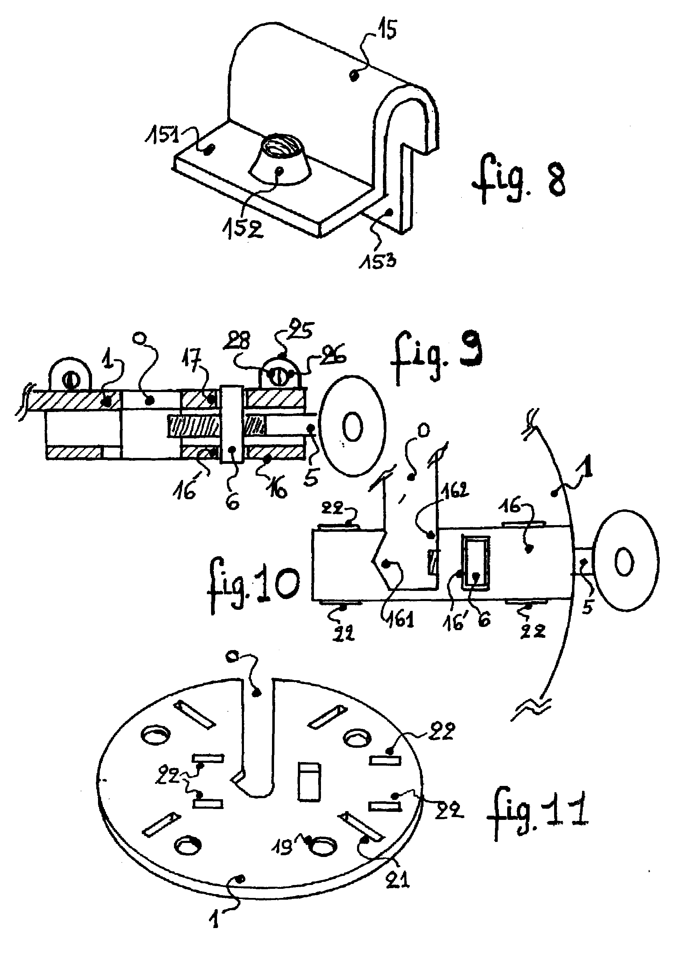

En se reportant aux figures 1 et 2, on comprend que le dispositif selon l'invention est facile à mettre en oeuvre et à adapter aux conditions variées que l'on rencontre dans la culture des végétaux.

Dans la réalisation particulière décrite où chaque fonction est bien personnalisée, on distingue les éléments suivants :

Sur une tige tuteur verticale, un plateau circulaire (1) lui est rendu solidaire par le moyen, par exemple, d'une vis de pression (5), vissée dans un écrou (6) fixé par tout moyen au plateau circulaire, et s'appuyant sur la tige.

Sur le dit plateau circulaire, des moyens de guidage axiale (2), préférablement des manchons au nombre de 4, sont rapportés par tout moyen approprié. Ces manchons supportent chacun un accessoire (8), (9), (10), (11) de forme appropriée ; lesquels accessoires sont aptes à supporter les différentes parties d'un végétal non figuré. La liaison entre le manchon et l'accessoire étant assurée par une tige (8') à (11') solidaire de l'accessoire correspondant. La dite tige introduite dans un manchon (2) par le moyen du trou (4) étant alors immobilisée par le moyen, par exemple, d'une vis de pression (3) vissée dans le trou fileté (3').

Différents modèles d'accessoires (8) à (11) ont été figurés pour illustrer la variété des besoins qui cependant ne se présentent pas simultanément pour un même végétal.

Les quatre modèles d'accessoire présentés ne sont pas une limitation aux modèles implicites dans le cadre de l'invention, comme le montre les figures 3 et 4.

On comprend facilement, après ces quelques explications en relation avec les figures 1 et 2, qu'un tel mode de réalisation du Bloc Porteur facilite l'adaptation du dispositif selon l'invention aux mille conditions de tuteurage rencontrées dans la culture des végétaux.

En effet, le plateau circulaire (1), étant ouvert par un moyen de guidage axial (0), de préférence une fente radiale et une tige tuteur y étant introduite, la vis de pression (5) est amenée sur la tige tuteur et serrée. Dans ces conditions, le Bloc Porteur est, d'une part rendu solidaire de la tige tuteur, d'autre part apte à subir, à tout moment, tout réglage en position le long de la dite tige.

Toutes les manoeuvres de pose, ajustement en position, dépose étant ainsi rendues très faciles, sans limitation aucune en quantité de Blocs Porteur sur la même tige, en phase de développement du végétale, ou lorsque la tige tuteur est plantée dans le sol.

Dans la disposition illustrée par les figures 1 et 2, une cale (7) est prévue pour équilibrer la force appliquée sur la tige tuteur par la vis de pression (5) et l'empêcher de provoquer le basculement du Bloc Porteur.

En examinant l'image agrandie de la figure 2, on constate bien que les différentes fonctions assurées par le Bloc Porteur sont indépendantes les unes des autres :

Installation et solidarisation sur une tige tuteur / Association et orientation spatiale d'accessoires choisis / Blocage des accessoires / Installation et Rétention des tiges du végétal par les accessoires / Modification de l'une ou l'autre condition d'emploi.

La disposition proposée permettant ainsi une grande souplesse d'adaptation aux besoins divers.

Pour ce qui concerne les accessoires, qui sont de formes variées, il convient de préciser les points suivant.

Leur fonction est de servir de liaison, d'interface entre le Bloc Porteur et le végétal à supporter.

Ils sont toujours munis d'une tige, par exemple (8'), qui permet de les solidariser au Bloc Porteur, par le moyen du trou (4) et de la vis pression (3). Généralement courte, cette tige peut avantageusement être allongée selon les besoins.

Ils sont normalement ouverts, rarement fermés sur eux mêmes.

Leur orientation spatiale autour de l'axe du trou (4) associé est possible sur 360°.

Ils peuvent être de formes et dimensions variées, principalement carrée comme l'accessoire (8), linéaire comme les accessoires (9) ou (10), en hélicoïde étiré comme l'accessoire (11) complété de la tige mobile (11'''), comme illustré par la figure 1.

On peut aussi prévoir que l'accessoire du genre (10) ait l'une de ses extrémités (10') pliée selon un angle approprié pour permettre que l'autre extrémité puisse être fichée en terre, comme illustré par la figure 3. On peut aussi, sans sortir du cadre de l'invention, remplacer la pliure de l'extrémité de la tige par une articulation non figurée. Plus simplement, on peut équiper la tige (10') d'un anneau au travers duquel passerait la tige (10) comme illustré par la figure 3.

On est alors amené à faire les remarques ci-après qui illustrent les avantages du dispositif selon l'invention.

D'une façon très générale, la variété de taille, de port et de comportement des végétaux impose des formes et dimensions d'accessoires très variées pour porter leurs tiges individuellement, en gerbe, en ligne, enroulées ou fixées, ...etc.

Soutenir des glaïeuls en ligne, des dahlias, roses trémières, tomates, fraisiers, pois, haricots...etc. ne se fait pas de la même façon pour tous ou avec un accessoire de type unique.

D'autre part, la mise en place d'un accessoire, sur un Bloc Porteur déjà installé sur une tige tuteur, est facile quelque soit la phase de développement du végétal. Il est donc possible à tout moment de poser un accessoire, le changer, y installer quelques tiges du végétal ou d'en modifier la répartition entre les différents accessoires. Tout cela sans brutaliser ou abîmer le végétal. Ce qui représente bien un important progrès.

En ce qui concerne les formes des accessoires proposés dans le cadre de la présente invention et en se référant à la figure 1, on précise les points suivants :
- la forme carré ou rectangulaire de l'accessoire (8) permet d'y tenir une ou plusieurs tiges végétales qui y sont facilement introduites puisque l'accessoire est toujours ouvert sur le dernier coté. Pour la même raison de l'ouverture, il est facile de modifier la position des tiges entre plusieurs accessoires (8).
- La forme linéaire des accessoires (9) et (10) est utile mais oblige à prévoir l'emploi d'attaches pour arrimer les tiges du végétale sur les dits accessoires.

La forme de l'accessoire (10) peut conduire à une variante utile illustrée à la figure 3, comme déjà précisé ci-dessus.
- La forme en hélicoïde étiré de l'accessoire (11) est commode car elle permet de répartir les tiges du végétale dans chaque spire grâce à une tige mobile (11''') qui ferme les spires au fur et à mesure de son déplacement. Cette même forme en hélicoïde peut être équipée à ses extrémités de deux tiges (11 ") et servir de bordure, comme illustré à la figure 4, en étant portée par deux tuteurs (12) de hauteur adaptée, munis d'un manchon (13) afin de tenir les tiges (11 ").

Bien sûr, et sans sortir du cadre de l'invention, il est possible de combiner entre eux les différents modèles ci-dessus décrits pour obtenir de nouveaux modèles, comme par exemple équiper un accessoire (10) de plusieurs anneaux au travers de chacun desquels passerait une tige semi verticale pour constituer ensemble un rideau de tuteurs .

Il convient maintenant d'examiner les différents modes de réalisation possibles du Bloc Porteur selon l'invention. En effet, le mode de réalisation ci-dessus décrit, au moyen de pièces mécaniques soudées, ne correspond pas à une solution optimale comme déjà dit précédemment, en particulier dans le cas d'une production en grande série.

En se référant à la figure 5 qui représente le Bloc Porteur obtenu en une seule opération par moulage, la pièce ainsi réalisée intègre toute les fonctions que l'on a précisées précédemment,

A savoir:
- la fente (0) dans laquelle une tige tuteur est introduite,
- l'écrou (6), qui porte la vis de pression (5), qui est remplacé par le trou latéral (5'),
- les trous (4) recevant les tiges d'accessoires,
- les trous (3') recevant les vis de pression (3) immobilisant les accessoires.

Dans le cas d'un moulage plastique, les trous (3') et (5') sont lisses de moulage et lors de la première pose des vis correspondantes ils sont naturellement filetés.

Les fonctions assurées dans ces conditions étant les mêmes que décrites précédemment, il est convenu de ne pas les décrire à nouveau.

Il convient maintenant de décrire un mode de réalisation possible à partir de deux pièces obtenues par emboutissage ou moulage, qui assemblées constitueraient ensemble le Bloc Porteur tel qu'il a été décrit ci-dessus dans son aspect fonctionnel.

En se référant à la figure 6, deux pièces (14) et (14'), obtenues par emboutissage, sont représentées. Ces pièces, en étant réunies, vont servir à constituer le Bloc Porteur(1).

Ces deux pièces circulaires (14) et (14') sont identiques et leur symétrie propre permet de les réunir en vis à vis. Elles sont réalisées dans une tôle métallique de faible épaisseur suffisamment rigide.

Quand les deux pièces (14) et (14') sont réunies, leurs rigoles respectives (15) et (16) sont en vis à vis et forment ensemble des trous pseudo cylindriques équivalents des trous (4) et (5') de la figure 5.

On convient de donner aux dits trous pseudo cylindriques les mêmes références (4) et (5').

Les trous (4) vont alors recevoir les tiges des accessoires associés comme décrit précédemment. Le trou (5') va recevoir une vis de pression (5) qui va provoquer le coincement de la tige tuteur au fond des fentes radiales (0). La vis de pression (5), étant guidée dans les rigoles (16) et s'appuyant sur un écrou (6) logé dans les fenêtres en vis à vis (17). Lesquelles fenêtres pourraient être avantageusement remplacées par des creux non ouverts.

Les deux pièces (14) et (14') sont liées entre elles par le moyen de quatre vis de serrage (18), engagées dans les trous (19). Ces quatre vis sont vissées dans les écrous (20) appuyés sur le flanc de la rigole (15) opposée à chaque vis (18).

Ces mêmes vis (18) servent chacune à serrer la tige de l'accessoire associé, dont le diamètre est supérieur au diamètre intérieur du trou pseudo cylindrique (4).

La manoeuvre de chaque vis (18) est indépendante des autres.

De même la pose du Bloc Porteur sur la tige tuteur, par manoeuvre de la vis de pression (5), peut se faire indépendamment de la situation des vis (18) serrées ou desserrées.

Il va sans dire que l'on ne sortirait pas du cadre de l'invention, si l'on réalisait les pièces (14) et (14') par des procédés de moulage métallique ou plastique moyennant quelques modifications de détails pour adaptation au procédé choisi et du fait que les dites pièces ne seraient plus totalement symétriques en vis à vis.

Dans le cas d'un moulage plastique, tous les trous et passages seraient lisses et si nécessaire filetés par la première pose de la vis associée.

Les descriptions qui précèdent ont permis de bien comprendre le dispositif selon l'invention ainsi que divers modes de réalisation pratique adaptés au tuteurage des végétaux.

Il convient de noter enfin que les termes et expressions employés au cours des dites descriptions doivent être pris dans leur sens le plus général et non pas strictement limité à leur sens particulier adapté à la précision, la clarté et la compréhension de la chose décrite à titre d'exemple non limitatif.

Dans un autre mode de réalisation, le dispositif selon l'invention comporte: un plateau mince unique plan (1), désigné par la suite par "le plateau", sur lequel est arrimé d'une part un dispositif pour fixation du dit plateau sur une tige verticale porteuse (T), d'autre part des organes qui constituent des trous ou pseudo trous (4) aptes à recevoir les tiges (x') d'accessoires (x) en collaboration avec la surface du plateau (1) et divers moyens de serrage associés.

Pour faciliter les descriptions qui vont suivre, on précise ici les fonctions des organes ainsi énumérés et combinés entre eux.

Le plateau unique (1) assure deux fonctions :
- être associé et fixé amoviblement à une tige verticale porteuse (T), ce qui implique de pouvoir l'engager sur la dite tige pour y être solidement fixé et positionné de façon stable, à l'horizontale, par des moyens appropriés.
- porter des organes mécaniques simples dont les rôles sont les suivants :

recevoir amoviblement les tiges (x') d'accessoires (x) associés,
tenir solidement les dites tiges,
faire que la direction de l'accessoire tenu soit fixée et stable,
faire que l'accessoire soit stable autour de son axe.

Pour la commodité des descriptions qui vont suivre, celles-ci seront d'abord centrées sur les organes de préhension des tiges (x') d'accessoires, en relation avec les figures qui suivent ci-après. Une deuxième partie sera ensuite consacrée à la description des moyens de fixation du plateau (1) à la tige porteuse (T).

On se reportera utilement aux figures 1 et 2 décrites précédemment, ainsi qu'aux figures désignées comme il suit :
- Figures 7 à 11: Plateau avec brides à filetage,
- Figures 12 à 14: Plateau avec brides à écrou,
- Figures 15 à 20.: Plateau avec manchon et crochet,
- Figure 21: Plateau avec pseudo manchon et crochet,
- Figure 22: Plateau avec languettes et crochet,
- Figure 23: Variante de la figure 21 avec came de serrage,
- Figure 24: Variante de la figure 21 avec rigole taraudée dessus,
- Figures 26 et 25: Plateau avec rigole clipsée à vis dessous,
- Figures 27, 28, 29, 30, 31 et 32: Plateau avec pièce de bridage en cisaille.

Comme illustré par les croquis ci-dessus énumérés, le concept de Bloc Porteur pour tuteur à plateau unique mince, selon l'invention, peut être réalisé de différentes manières qui associent au dit plateau : des vis pour serrage, dans des trous ou pseudo trous, des tiges d'accessoires associés et une vis de pression radiale pour sa fixation sur une tige verticale.

La série des croquis ci-dessus désignés correspond plus particulièrement à des réalisations métalliques pour la simple raison qu'elles sont plus faciles à mettre en oeuvre pour la fabrication de prototypes.

Cependant, il est bien évident que des réalisations en matériaux moulés plastiques ou métalliques sont envisageables et prévues dans le cadre de la présente invention, moyennant quelques adaptations de détails.

Bien que nombreuses, les descriptions qui suivent concernant les organes tenant les tiges d'accessoires, ne semblent pas épuiser le sujet.

Mais il est évident que l'on ne sortirait pas du cadre de l'invention si l'on venait à réaliser un dispositif similaire conduisant aux mêmes résultats.

Dans les croquis énumérés, les références utilisées pour désigner les différents éléments sont (dans la mesure du possible) en correspondance avec celles employées pour décrire les figures 1 à 6.

Si, maintenant, on se réfère à la figure 7, on constate que le plateau mince (1) est unique, circulaire ou carré et plan.

Cette planéité étant un avantage important conduisant à la réduction des coûts ainsi qu'à une meilleure précision de fabrication.

La vue d'ensemble représentée permet de comprendre que les différentes pièces associées sont tenues par des moyens simples et facilement démontables sans outillages particuliers, comme cela est précisé ci-après.

La forme circulaire du plateau (1) a été choisie pour faciliter la représentation et pour commodité d'interprétation des croquis.

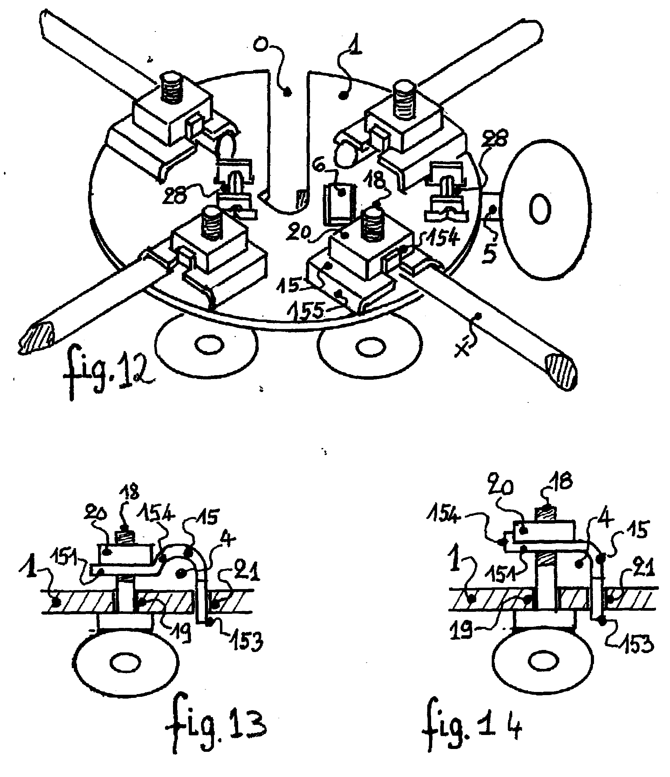

Sur le plateau (1), un organe de bridage (15), que l'on peut désigner par rigole, bride, manchon ou pseudo manchon, est fixé par le moyen de la vis de serrage (18) engagée, par exemple dans un trou (19) du plateau (voir la figure 11) et/ou dans le trou taraudé (152) porté par la palette (151) de la bride (15).

Par le moyen de la partie roulée de la bride (15) un trou ou plutôt un pseudo trou (4) est ainsi constitué en collaboration avec la surface du plateau (1). Dans lequel trou (4) est alors engagée la tige (x') d'un accessoire (x) non figuré.

Dans ces conditions, le serrage de la vis (18) fait que la tige (x') est alors immobilisée dans son logement (4).

Généralement, sur le même plateau (1), à plus ou moins 90° et à 180°, on trouve la même disposition d'arrimage d'un accessoire (x).

La figure 8 permet de bien comprendre la conception de la bride (15). Sa forme demi cylindrique permet de contenir la tige (x'). Le trou taraudé (152) permet le serrage de la vis (18) comme dit ci-dessus.

Le bord roulé de la bride est allongé d'une languette (153) engagée dans une fenêtre (21) découpée dans le plateau (1). Elle a pour rôle d'empêcher l'équipage de la bride et de la tige d'accessoire de pivoter autour de l'axe de la vis (18).

Sans sortir du cadre de l'invention, on pourrait bien remplacer le couple "fenêtre découpée (21)/languette (153)" par un épaulement, découpé et relevé dans le plateau (1), sur lequel s'appuierait le flanc roulé de la bride (15) ou tout autre bord de la dite bride.

Pour résumer et en se référant à la figure 7, les fonctions assurées par la bride (15) sont les suivantes :
Constituer le pseudo trou (4), en association avec le plateau (1),
Recevoir la tige (x') d'un accessoire,
Immobiliser la tige (x') dans son logement,
Conserver une même direction à la tige (x').

Le plateau (1) devant être tenu, fixé amoviblement sur la tige verticale porteuse (T), non figurée comme cela a déjà été précisé, la vis de pression (5) est prévue pour exercer une force sur la tige et la pousser contre le plateau (1). A cet effet, la vis (5) est tenue dans une rigole, gaine ou guide (16) qui est fixée sur l'une des faces du plateau (1), comme illustré par les figures 9 et 10.

La figure 9 montre une vue de côté en coupe parallèlement à l'axe de la vis (5),

La figure 10 est une vue de dessus de la rigole (16).

Dans la configuration représentée, la rigole (16) est réalisée à partir d'une pièce de tôle découpée et pliée pour contenir l'écrou (6) dans une fenêtre (16') associée à la fenêtre (17) du plateau (1). Dans lequel écrou vient s'engager la vis (5).

Quand la vis (5) pousse la tige (T) non figurée, introduite au fond de la fente radiale (0), contre le bord intérieur de la dite fente radiale (0), il est évident que l'équilibre du plateau (1) n'est pas assuré, le plateau prenant une position oblique. L'objet de la découpe (161/162) de la rigole (16) est donc de rétablir cet équilibre par le moyen de l'épaulement (161).

Pour ce qui concerne la fixation de la rigole (16) sur le dessous du plateau (1), celle-ci est réalisée par le moyen des quatre languettes (25) qui sont introduites dans des fenêtres (22) découpées dans le plateau. Ces languettes étant elles mêmes fixées par les goupilles (28) glissées dans les trous (26) ou tout autre moyen tel un pliage à 90°.

Bien entendu, le mode de réalisation de la rigole (16) peut être différent selon les choix techniques qui peuvent être faits entre diverses solutions comme celles, entre d'autres, qui sont décrites plus loin dans la présente demande.

Pour ce qui concerne la figure 11, celle-ci illustre un mode de réalisation du plateau (1) par exemple en tôle d'acier, découpée et poinçonnée pour obtenir les différents trous, fenêtres, fentes et passages qui peuvent être nécessaires, tels que: trous (19) pour les vis (18), fenêtres (21) pour les languettes (153), les fenêtres (22) pour les languettes (25), la fenêtre (17) pour l'écrou (6), la fente radiale (0) pour le passage de la tige (T) et autres selon besoins.

En se reportant maintenant à la figure 12, on constate une disposition très semblable à celle de la figure 7 sauf que la bride (15) comporte un trou (152) qui n'est plus taraudé mais lisse. Dans ces conditions, l'écrou (20) apporte le taraudage nécessaire à la vis (18).

Comme le montrent les figures 12, 13 et 14, le mode de réalisation de la bride (15) peut être varié en particulier selon le mode d'arrêt de l'écrou par une languette ou un épaulement sous référence commune (154).

Pour ce qui concerne le dispositif antirotation autour de l'axe de la vis (18), on retrouve sur le bord roulé de la bride (15) une languette (153) traversant le plateau (1) à travers une fenêtre (21) dont le rôle est le même que pour la figure 1, avec les mêmes remarques associées.

En résumé, la bride (15) de la figure 12 assure les fonctions suivantes :
Constituer le pseudo trou (4), en association avec le plateau (1),
Porter et immobiliser un écrou (20),
S'appuyer sur le plateau (1) par le moyen du bord rabattu (155) opposé à la vis (18) par rapport au trou (4),
Recevoir la tige (x') d'un accessoire,
Immobiliser la tige (x') dans son logement,
Conserver une même direction à la tige (x').

Pour ce qui est du plateau (1), de la vis de pression (5) et du guide (16), les dispositions sont les mêmes que pour la figure 7.

Si on examine maintenant la figure 15, la disposition proposée concerne un mode de réalisation du manchon (2) qui définit le trou (4) dans lequel est engagée la tige (x') d'un accessoire (x) non figuré.

Comme illustré, le serrage de la tige (x') dans le trou (4) est réalisé par le moyen d'une barre de pression (181) qui est pliée à 90° pour former un crochet et dont un des bouts (18) est fileté. Le bout fileté (18) est alors engagé dans le trou (19) du plateau (1) et sollicité par un écrou, par exemple du genre papillon. La barre de pression (181) étant engagée dans l'ouverture (2-2) portée par le dessus du manchon (2).

La figure 16 montre la position relative des éléments constitutifs.

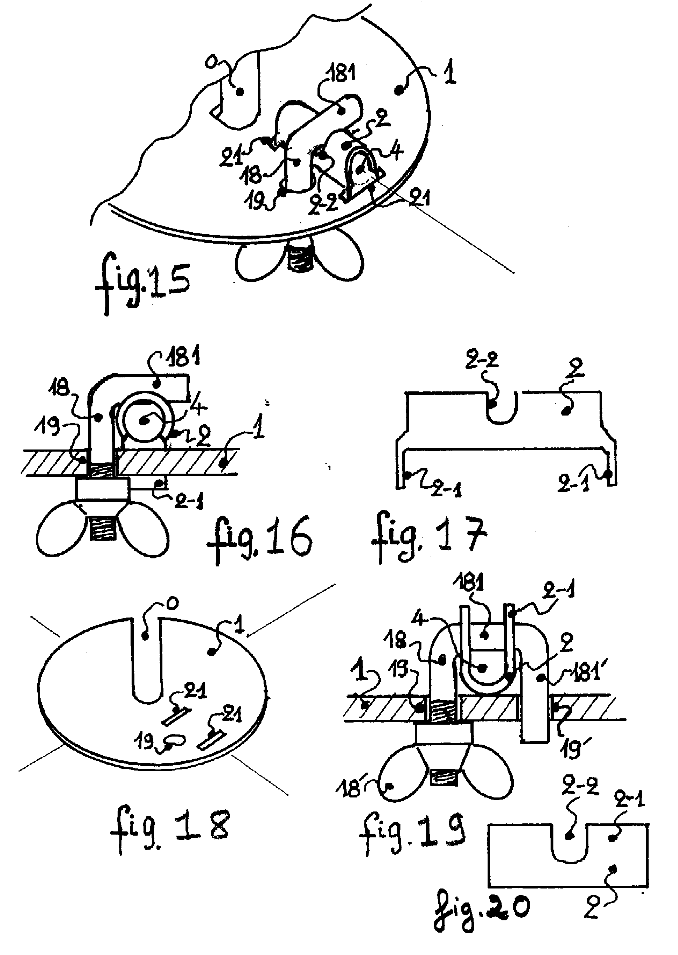

La figure 17 montre deux languettes (2-1), qui ont la particularité d'être situées aux extrémités du manchon (2), et qui sont engagées dans les fenêtres (21) du plateau (1) comme montré aux figures 15 et 16.

Les autres dispositions restent les mêmes que pour les figures 7 et 12.

Il semble évident que l'on ne sortirait pas du cadre de l'invention si la languette arrière (2-1) était percée d'un trou pour y glisser une goupille, en même temps que la languette avant serait repliée dans une encoche découpée sur le bord du plateau (1). Cette disposition présente l'avantage de ne pas perdre le manchon (2) quand l'écrou papillon est un peu trop dévissé sur la vis (18).

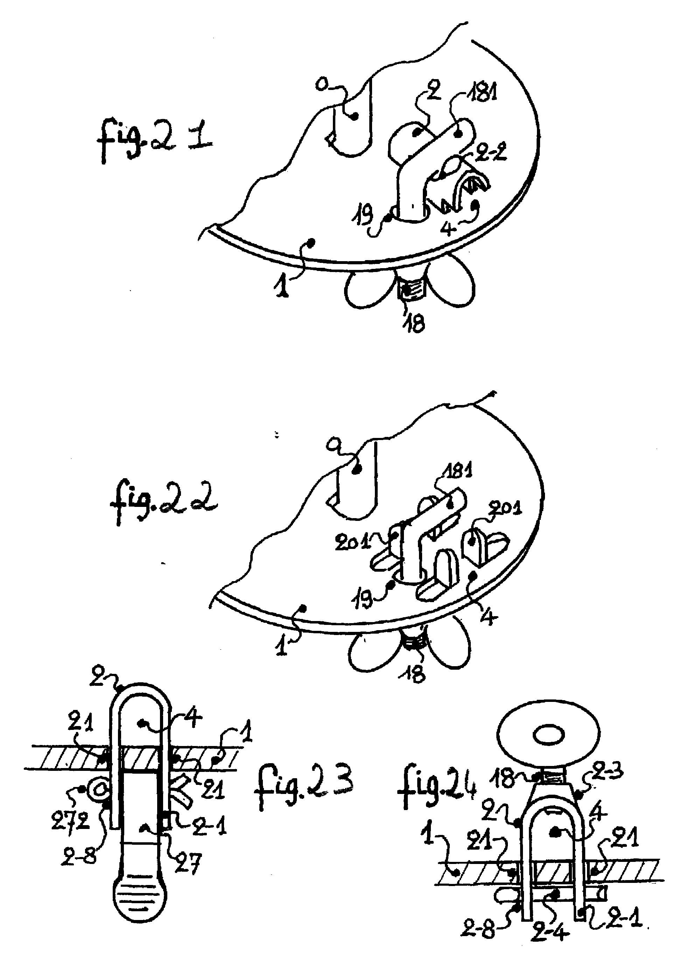

Dans le cas de la figure 19, le pseudo trou (4) est constitué par une tôle roulée en demi cercle (2) dont les deux extrémités en languette (2-1) portent chacune une ouverture (2-2) dans lesquelles est placée la barre de pression (181), laquelle barre est prolongée par la portion de barre (181') qui est à son tour pliée à 90° pour pouvoir rentrer dans un trou (19') à travers le plateau (1) et empêcher ainsi la rotation autour de l'axe de la vis (18).

Cette disposition ayant l'avantage de mettre en oeuvre des trous ronds (19, 19') plus faciles à réaliser que les fenêtres rectangulaires et étroites (21) qui sont alors supprimées.

On peut encore simplifier le dispositif correspondant à la figure 19 en supprimant le pseudo manchon (2) et en donnant à la barre de pression (181) une forme cintrée de dimension voisine de celle de la tige (x') de façon que la dite tige soit fermement tenue quand l'écrou (18') est serré.

Dans le cas de la figure 21, le pseudo trou (4) est réalisé, en collaboration avec la surface du plateau (1), par le moyen d'un pseudo manchon (2) en tôle roulée en demi cercle et terminé par deux languettes (2-1) engagées dans les fenêtres (21) du plateau (1) des figures 23 ou 24.

Pour le reste, les dispositions sont les mêmes que dans le cas de la figure 15.

Comme ci-dessus, on peut aussi envisager de prolonger la barre (181) d'une portion de barre (181') pliée à 90° pour la faire pénétrer dans un trou (19') du plateau (1) et supprimer les fenêtres (21) ainsi que le pseudo manchon (2).

Dans le cas de la figure 22, le manchon (2) n'est plus matérialisé. Il est remplacé par quatre languettes (201) relevées sur le plateau (1), qui constituent ensemble un guidage pour la tige (x') qui est alors immobilisée par l'ensemble de serrage (18, 181).

Les autres dispositions restent identiques aux descriptions qui précèdent.

La figure 23 correspond à la même disposition que pour la figure 21 sauf que le moyen de serrage (18,181) est assuré par une came (27) qui va tirer les languettes (2-1) par l'intermédiaire de la goupille (272) et serrer la tige (x') entre la rigole (2) et le plateau (1).

Dans le cas de la figure 24, on trouve une disposition similaire à la figure 21 sauf que le moyen de serrage (18,181) est remplacé par une vis de pression (18) vissée sur le dessus de la rigole (2) dans le trou taraudé (2-3) qui y est situé. Ainsi, la tige (x') peut être serrée sur le plateau (1).

Les deux languettes (2-1) étant retenues dans les fenêtres (21) du plateau (1) par le moyen d'une goupille (2-4) engagée dans les trous (2-8), ou tout autre moyen.

Examinons maintenant la figure 26.

Dans ce cas le dispositif à manchon (2) muni de deux languettes est fortement modifié en ce sens que les deux languettes (2-1) du manchon (2) sont courtes et rabattues latéralement sur la face opposée du plateau (1) pour former des crampons (2-5) qui vont accrocher le dit manchon au plateau.

En même temps que ces crampons sont formés par déformation à froid, une forme cylindrique (2-3) est obtenue en position médiane de la pièce (2), simultanément (ou ultérieurement) que des filets sont imprimés sur la paroi de la dite forme cylindrique.

Ainsi donc, quand la pièce (2) est engagée dans une fenêtre unique (21) du plateau (1), le trou fileté (2-3) reçoit une vis (18) qui va assurer deux fonctions :
Ecartement des languettes (2-5) contre les parois de la fenêtre (21),
Serrage de la tige (x') dans le trou (4).

Il reste enfin à examiner les figures 27 et annexes.

Dans cette disposition, la notion de manchon allongé (2) est complètement transformée pour faire place à un organe ou « tenon » ou pièce de bridage de forme plate ou cylindrique (2) percée d'un trou lisse (4) recevant la tige (x'), laquelle est alors pressée sur le plateau (1) comme cela est décrit ci-dessous. Pour éviter qu'il échappe du plateau, quand la tige (x') n'est pas engagée, l'organe de bridage (2) est muni de deux épaulements (2') quand il est plat et d'un seul quand il est cylindrique.

La figure 27 montre une pièce de bridage plate en forme de tenon (2) montée sur un plateau (1), à travers une fenêtre (21).

Pour permettre de le tirer par l'autre coté du plateau (1), l'organe ou pièce de bridage (2) est muni d'une prolongation en forme de tige fileté (18) ou bien en forme de languette (2-1) découpée sur ses bords d'un profil de filetage (2"). De cette façon, il est possible de visser sur ladite prolongation un bouton de manoeuvre (18') pour assurer la fonction de serrage, de préférence muni d'un dispositif permettant le blocage en rotation autour d'un axe perpendiculaire audit plateau (1).

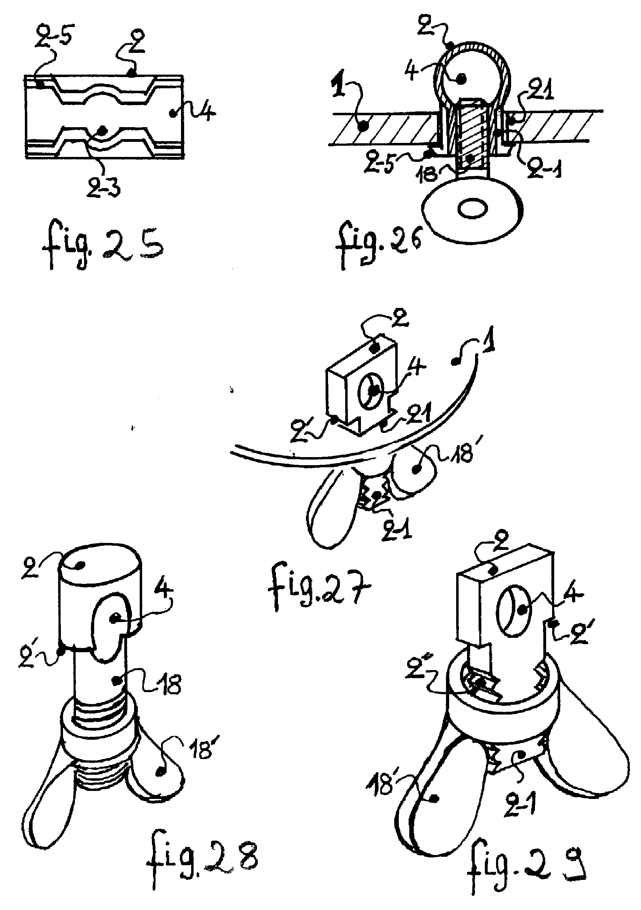

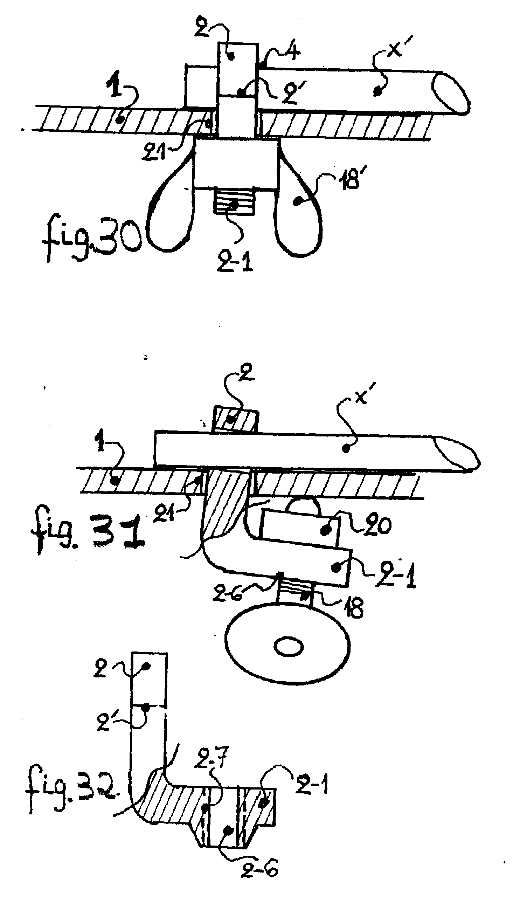

Les figures 28 et 29 correspondent respectivement à une pièce de bridage cylindrique et plate.

Comme le montre la figure 30, quand l'équipage (2,2-1,18') est installé sur le plateau (1), au travers d'une fenêtre adaptée (21), une tige (x') peut être engagée dans le trou (4) ; alors la manoeuvre du bouton (18') va provoquer le serrage de la tige (x') sur le plateau et son immobilisation.

Comme le montre les figures 31 et, on obtiendrait le même résultat si la languette (2-1) était pliée à 90° par rapport à la pièce de bridage (2). Alors, la vis (18), passant dans le trou (2-6) et vissée dans un écrou séparé (20), aurait pour effet de provoquer simultanément une traction ainsi qu'une torsion sur la tige (x') pour la presser contre le plateau (1) et la coincer dans le trou (4) et donc finalement l'immobiliser.

La figure 32 représente une variante de la figure 31. Alors, le trou (2-6) de la languette (2-1) porte un taraudage (2-7) dans lequel la vis (18) est engagée.

Comme le montre les descriptions précédentes, les dispositions possibles, pour assurer la préhension des tiges (x'), dans le cadre de l'invention, sont nombreuses.

Dans les descriptions qui précèdent, et comme on l'avait annoncé, il n'a pas été beaucoup question des moyens de fixation du plateau unique plan (1) sur la tige verticale porteuse (T).

Il convient donc maintenant de faire la description de quelques uns des dispositifs possibles pour assurer cette fixation.

Les modes de fixation possibles du Bloc porteur (1) sur la tige porteuse (T) sont variés et on peut, sans être exhaustif, les classer comme suit :

Dispositifs à vis de pression radiale avec épaulement selon figures 7, 9, 10.

| | |
|---|---|
| Dispositifs à came (vue en coupe) | selon figure 33. |
| Dispositifs à ressort | selon figure 34 |
| Dispositifs à pince | selon figure 35. |
| Dispositifs autobloquants (vue en coupe) | selon figure 36. |
| Dispositif à pince en étau | selon figure 37. |

Les dispositifs à vis latérale radiale et ceux à pince en étau sont les réalisations préférées. Ainsi donc, sans vouloir restreindre les limites de la présente invention, les descriptions qui suivent seront limitées aux "vis latérale" et "pince étau".

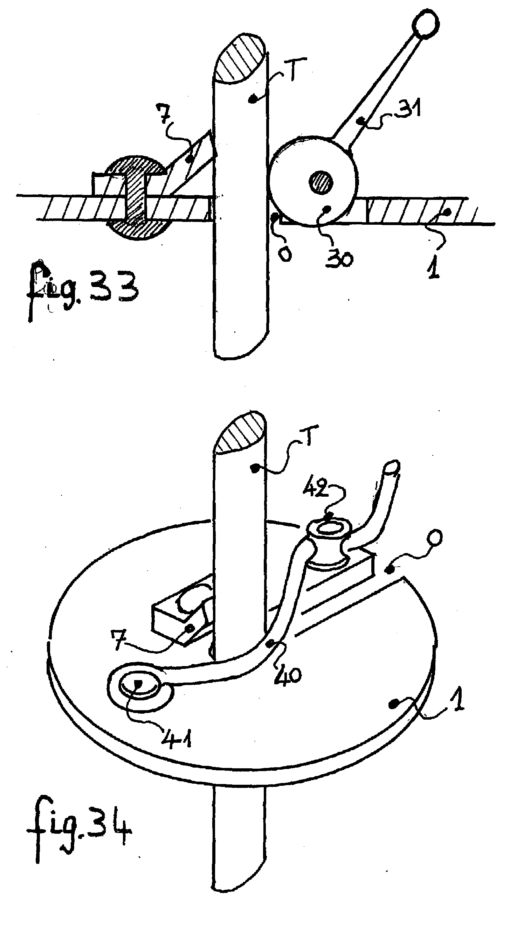

Le dispositif à came selon la figure 33 fait intervenir une roue excentrée(30) portée par un axe solidarisé au plateau (1) et situé pour que la dite roue s'appuie sur la tige (T) quand elle est au fond de la fente (0). Si alors, par un moyen quelconque, tel qu'une manette (31), on fait tourner la roue, celle-ci appuie de plus en plus fort la tige (T) dans le fond de la fente(0).

Pour que le système des forces soit équilibré, il faut prévoir un épaulement (7).

Si deux cames symétriquement situées sur le plateau (1) sont utilisées, l'épaulement d'équilibrage n'est plus nécessaire. Ce dispositif à came ne paraît pas intéressant parce que encombrant sur la surface réduite du plateau et aussi parce que plus compliqué qu'une vis de pression.

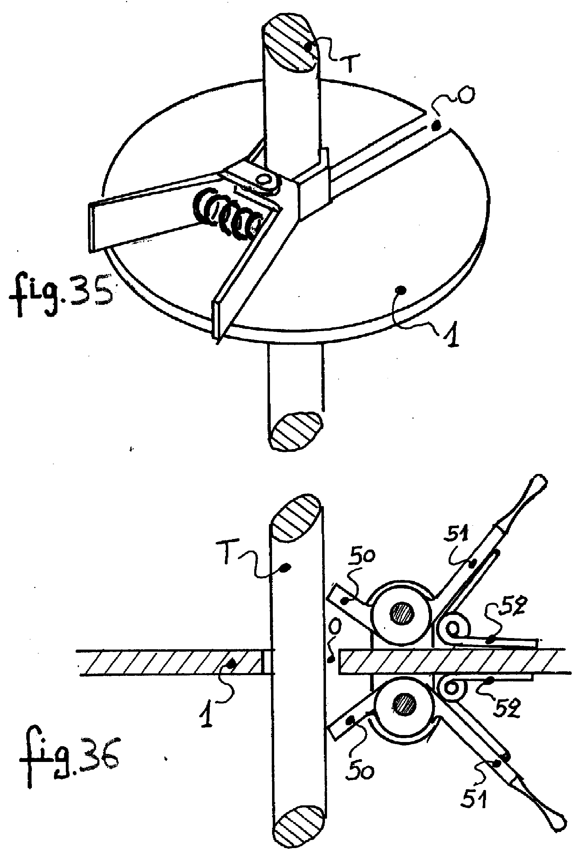

Le dispositif à ressort de la figure 34 consiste à bander contre la tige (T) la tige ressort (40), tenue par deux pions (41) et (42). Ce qui a pour effet de serrer la tige (T) au fond de la fente (0). Comme ci-dessus, il faut prévoir un épaulement (7) d'équilibrage des forces. Ce dispositif est probablement facile à réaliser et économique mais peut être mal commode à manoeuvrer.

Le dispositif à pince de la figure 35 ne peut pas être assez puissant sauf à l'équiper de ressorts énergiques.

Le dispositif autobloquant à deux lames (50), de part et d'autre du plateau (1) comme illustré par la figure 36, est séduisant et manoeuvrable d'une seule main. De plus il peut être très puissant. Les lames (50) sont prolongées par un levier de manoeuvre (51) poussé par un ressort (52). Le système est naturellement équilibré.

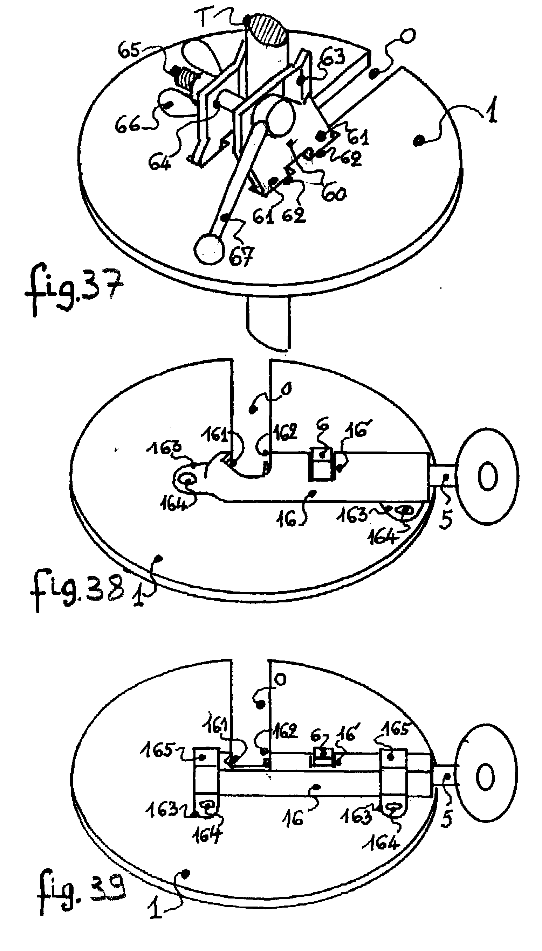

Le dispositif à pince en étau selon la figure 37 met en oeuvre deux plaques (60) embouties symétriques, dont la base est tenue amoviblement par le moyen des languettes (61) engagées dans les fenêtres (62) découpées de part et d'autre de la fente (0) du plateau (1). L'extrémité haute des plaques (60) est formée en mâchoire (63), en même temps qu'elles portent chacune un trou (64) traversé par une vis commune (65) qui peut être serrée.

Quand la tige (T) est prise entre les mâchoires (63), le fait de serrer la vis (65) fait que l'ensemble Plateau (1) / plaques (60) est alors fixé solidement sur la tige.

Dans le début de la présente description, un moyen de fixation du plateau (1) sur la tige porteuse (T) a été décrit, en référence à la figure 1, qui consiste à serrer la dite tige dans la fente (0) par le moyen d'une vis de pression (5) tenue et guidée dans une rigole (16) qui contient un écrou (6) où est engagée la vis, comme le montrent les figures 9 et 10 de la présente description.

Compte tenu de ce que la résultante des forces tend à faire basculer le plateau (1), autour du point d'appui de la tige (T) sur le bord interne de la fente du plateau (1), et pour rétablir l'équilibre, la rigole (16) est munie d'un épaulement ou appui (161).

Pour la lier au plateau (1), la rigole (16) est équipée de languettes de fixation (25) qui sont goupillées sur la face opposée du plateau.

Bien sûr, cette disposition n'est pas la seule possible.

En conséquence, on se reportera aux figures suivantes qui illustrent différentes solutions avec vis de pression.
- Figure 38: Vis de pression dans rigole emboutie,
- Figure 39: Vis de pression dans rigole en profilé,

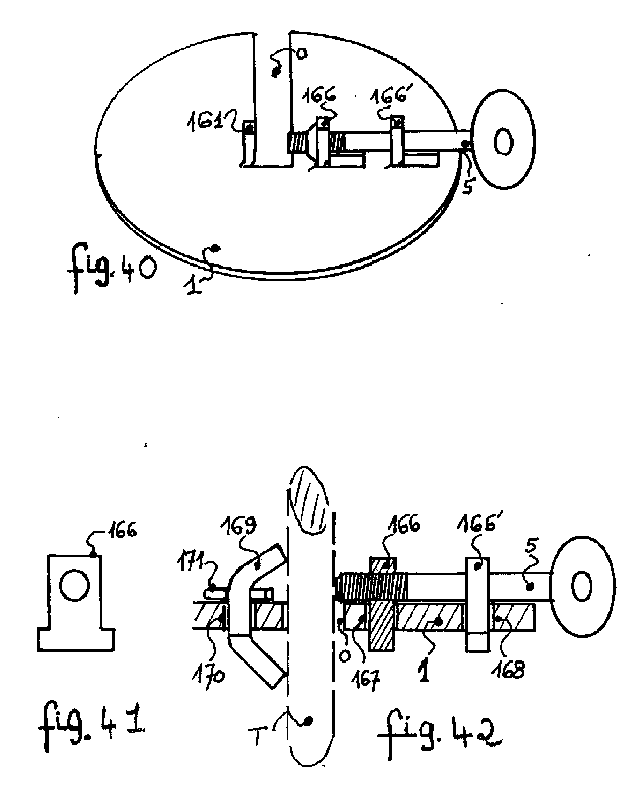

- Figure 40: Vis de pression sur languettes de guidage,
- Figures 41 et 42: Variantes de la figure 40

Cependant, ce dispositif à vis (5) paraît être le plus simple et le plus facilement adaptables aux diamètres variés de la tige (T).

En se reportant à la figure 38, la rigole, gaine ou guide (16) est réalisée à partir d'une plaque de tôle découpée, formée à froid. Elle comporte les différents éléments déjà mentionnés tels une fenêtre (16') pour recevoir l'écrou (6), une découpe (162) pour placer la tige (T), un épaulement (161) pour assurer l'équilibre des forces.

Pour permettre la fixation de la rigole (16) sur le plateau (1), elle comporte des pattes de fixation (163) qui, dans le cas de la figure 38 et à titre d'exemple non limitatif, sont percées d'un trou (164) pour fixation par vis ou rivet. Le plateau (1) fournissant des trous en correspondance.

Dans le cas de la figure 39, le guide (16) est une portion de profilé métallique tenue par des étriers (165) munis de pattes (163), éventuellement percées de trous (164) pour fixation au plateau (1), par vissage , rivetage ou soudage; l'écrou (6) logé dans la fenêtre (16') assurant le verrouillage du guide (16) par rapport au plateau (1) en association avec la fenêtre (17) du dit plateau, comme illustré à la figure 9.

On peut envisager de supprimer l'écrou (6) en le remplaçant par une empreinte de filets par pression à froid des flancs du guide (16) sur une matrice ou tout autre moyen. Cependant il faudrait alors que le guide (16) soit rendu solidaire d'au moins un des étriers (165) par tout moyen connu.

Pour le reste les dispositions sont les mêmes que pour la figure 38.

La figure 40 montre comment les éléments de guidage de la vis (5) peuvent être déduits directement du plateau (1) par découpe de languettes redressées. (166 et 166').

L'une de deux languette est taraudée, l'autre est lisse.

On peut imaginer de rapporter ces languettes par une pièce en tôle pliée à 90° à ces deux extrémités pour former les languettes (166, 166') et les fixer au plateau (1), par tout moyen comme par exemple passer les dites extrémités dans des fenêtres appropriées du plateau (1).

Une disposition similaire consisterait à utiliser des languettes à épaulement (166) comme illustré à la figure 41, qui seraient engagées dans des fenêtres(167,168) du plateau (1) comme illustré à la figure 42.

L'une des deux languettes ci-dessus étant taraudée pour recevoir la vis (5).

Pour ce qui concerne l'équilibrage du plateau, divers moyens sont envisageables pour compléter les dispositifs à languettes ci-dessus.

On peut envisager, comme le montre la figure 40, de relever une portion de la fente (0) lors de sa découpe au niveau du fond de la dite fente pour obtenir l'appui ou cale d'équilibrage (161).

On peut aussi, comme le montre la figure 42, utiliser une cale (169), à deux branches pliées à 90° environ et munie d'un épaulement, qui serait glissée dans une fenêtre (170), et enfin fixée par une goupille (171). Quand la vis pousserait la tige (T), les extrémités de la cale (169) viendraient retenir la dite tige de part et d'autre du plateau (1) et assurer ainsi son équilibre.

En se référant maintenant à la figure 37, il convient de compléter la description du dispositif de fixation dit "pince en étau".

Dans cette disposition, deux plaques symétriques (60) encadrent la tige porteuse (T) et sont fixées amoviblement sur le plateau (1) par le moyen des languettes (61) engagées dans des fenêtres (62) découpées dans le dit plateau, de part et d'autre de la fente (0).

L'extrémité haute des plaques est formée en mâchoire (63). A l'opposé des dites mâchoires, les plaques portent chacune un trou (64) traversé par la vis (65) pour les rapprocher l'une de l'autre grâce à l'écrou papillon (66). Dans ces conditions, l'ensemble étant constitué, quand une tige (T) est engagée dans les mâchoires (63), le vissage de l'écrou (66) va provoquer le pré serrage des mâchoires sur la tige. Ensuite, la manoeuvre en demi-tour de la manette (67) solidaire de la vis (65) va terminer le serrage des mâchoires sur la tige et assurer une solide fixation.

Les descriptions qui précèdent ont permis de bien comprendre les dispositions et modes de réalisation que l'on propose, à titre non limitatif, selon l'invention d'un bloc porteur à plateau unique pour le tuteurage de végétaux.

Il convient de bien noter, après ces longues descriptions, que si l'on venait à combiner entre elles telle ou telle partie des dispositifs décrits pour réaliser une disposition qui n'aurait pas été présentement décrite, on ne sortirait pas pour autant du cadre de la présente invention.

En particulier, les moyens de serrage décrits pour bloquer en position des tiges d'accessoires peuvent être utilisés pour le blocage de la tige de tuteur (tige porteuse), et réciproquement.

## Revendications

1. Dispositif de tuteurage comportant un bloc porteur (1) et des tiges (8',9',10',11') de tuteur et d'accessoires solidarisables au bloc porteur (1) par insertion dans des trous (4) ou des fentes (0) correspondants ménagés dans le bloc porteur (1), **caractérisé en ce que** ledit bloc porteur comporte des moyens de serrage réglables (3, 5, 18), indépendants les uns des autres, pour bloquer en position lesdites tiges insérées dans lesdits trous (4) ou lesdites fentes (0).

2. Dispositif selon la revendication 1 dans lequel le bloc porteur (1) comporte des trous (4) radiaux pour recevoir des tiges d'accessoires (8',9',10', 11').

3. Dispositif selon l'une quelconque des revendications 1 et 2 précédentes dans lequel le bloc porteur (1) comporte une fente radiale (0) apte à recevoir une tige de tuteur, lesdits moyens de serrage réglables (5) assurant une fixation de ladite tige de tuteur par serrage au fond de la fente radiale (0).

4. Dispositif selon l'une quelconque des revendications précédentes dans lequel les moyens de serrage réglables (3, 5, 18) comportent une vis de pression ou une came (27).

5. Dispositif selon l'une quelconque des revendications précédentes dans lequel le bloc porteur (1) est réalisé en une pièce monobloc plane ou en deux pièces définissant, par complémentarité de forme (15), des trous (4) de réception de tiges d'accessoires.

6. Dispositif selon l'une quelconque des revendications précédentes comportant un accessoire en forme d'hélicoïde étiré et une tige mobile interne (11''') destinée à être introduite dans les boucles de l'hélicoïde étiré.

7. Dispositif selon l'une quelconque des revendications 1 à 6 comportant un accessoire qui n'est pas fermé sur lui-même et dont une extrémité est insérée dans un desdits trous(4).

8. Dispositif selon l'une quelconque des revendications précédentes comportant des moyens de guidage axial (0 ; 2 ; 4 ; 15 ; 161 ; 201) ou de butée d'une desdites tiges d'accessoires ou de tuteur.

9. Dispositif selon la revendication 8, comportant des moyens conformés pour limiter le déplacement des moyens de guidage axial (0 ; 2 ; 4 ; 15 ; 161 ; 201) par rapport au bloc porteur (1), en particulier sous forme d'une cale (7, 161, 169) ou d'une plaque (60).

10. Dispositif selon l'une quelconque des revendications précédentes comportant un moyen de bridage (15 ; 181 ; 16) conformé pour former avec le bloc porteur (1) un logement de réception (4) d'une tige d'accessoires ou de tuteur, une vis de pression étant préférentiellement prévue pour serrer le moyen de bridage.
